Europäisches Patentamt

European Patent Office

Office européen des brevets

(11) Numéro de publication: **0 064 917**
**B1**

(12) **FASCICULE DE BREVET EUROPEEN**

(45) Date de publication du fascicule du brevet:
31.07.85

(21) Numéro de dépôt: **82400781.9**

(22) Date de dépôt: **29.04.82**

(51) Int. Cl.⁴: **B 64 G 1/44,** H 04 B 7/19

(54) **Procédé de mise sur orbite d'un satellite artificiel.**

(30) Priorité: **07.05.81 FR 8109066**

(43) Date de publication de la demande:
**17.11.82 Bulletin 82/46**

(45) Mention de la délivrance du brevet:
**31.07.85 Bulletin 85/31**

(84) Etats contractants désignés:
**DE GB IT NL SE**

(56) Documents cités:
**FR - A - 1 591 682**
**FR - A - 1 600 012**
**FR - A - 2 365 154**

(73) Titulaire: **Société Nationale Industrielle Aérospatiale
Société anonyme dite:, 37 Bld de Montmorency,
F-75016 Paris (FR)**

(72) Inventeur: **Barkats, Gérard, Les Terrasses B/C 433 rue
Janvier Pasero, F-06210 Mandelieu (FR)**
Inventeur: **Morel, Charles, 22 bld. Carnot L'Oasis,
F-06110 Le Cannet (FR)**

(74) Mandataire: **Bonnetat, Christian, Cabinet PROPI
Conseils 23 rue de Léningrad, F-75008 Paris (FR)**

## Description

La présente invention concerne les satellites artificiels géostationnaires stabilisés suivant trois axes et devant disposer d'une puissance importante au cours de leur phase de transfert.

On sait qu'un satellite artificiel de la terre est composé de plusieurs sous-ensembles dont généralement au moins un générateur solaire à conversion photovoltaïque. Ce générateur constitue la source principale primaire de courant électrique à bord du satellite et fonctionne lorsqu'il reçoit le flux photonique émanant du soleil. En dehors des périodes d'éclairement ou lorsque celui-ci est insuffisant, une source secondaire fournit le courant électrique. Cette source secondaire est constituée, par exemple, de batteries chimiques. De plus, elle peut constituer un tampon en cas de production excédentaire d'énergie électrique par ledit générateur.

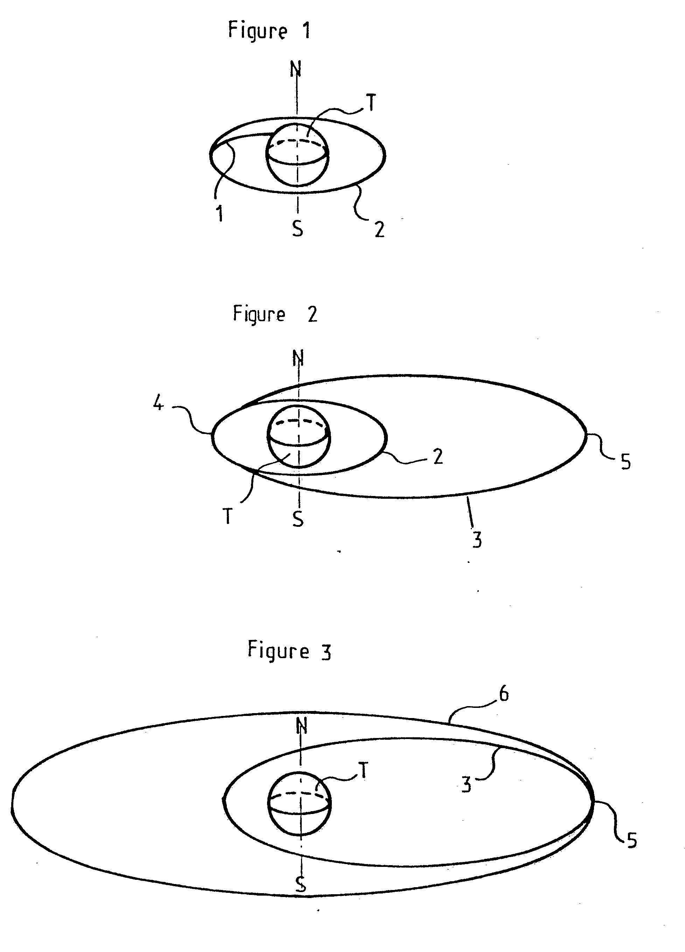

Lorsque le satellite est destiné à être placé sur une orbite haute dite »géostationnaire« ou »géosynchrone« (avec une période de révolution de 24 heures, égale à celle de la Terre), la mise à poste du satellite sur la dite orbite se fait en plusieurs séquences, comme cela est illustré par les figures 1 à 3 annexées.

En général, le satellite est d'abord lancé sur une orbite basse quasi-circulaire (altitude de l'ordre de 200 km). Il peut aussi être injecté directement sur une orbite elliptique de transfert, qui est l'étape suivante de la mise à poste. Le périgée de cette orbite de transfert est de l'ordre de 200 km (comme l'orbite basse) et l'apogée se situe à environ 36 000 km de la terre (comme l'orbite géostationnaire).

Le satellite décrit en général une ou plusieurs fois l'orbite de transfert: durant cette période, des corrections de trajectoire et d'orientation angulaire peuvent être effectuées en fonction des informations reçues par l'intermédiaire de télémesures. En fonction de ces informations, le personnel de contrôle au sol, assisté par des moyens de calculs, peut donner des ordres au satellite par télécommande.

Ensuite, la manoeuvre d'apogée est préparée et effectuée par l'intermédiaire de ces mêmes moyens de communication. L'orientation du satellite est assurée de manière que l'impulsion fournie, à l'instant adéquat, par un propulseur, dit d'apogée, place ledit satellite sur une orbite quasi-circulaire géostationnaire ayant une période de 24 h. Cette manoeuvre est effectuée au voisinage de l'apogée de l'orbite elliptique de transfert.

Finalement plusieurs manoeuvres de faible amplitude permettent de placer le satellite d'une façon très précise sur son orbite finale. La durée de parcours d'une orbite elliptique de transfert est de l'ordre de 10 heures. Durant la période de transfert, qui peut comporter le parcours de plusieurs orbites, un certain nombre d'organes vitaux de survie et de surveillance du satellite doivent pouvoir fonctionner au moyen d'énergie électrique. Etant donnée la durée de fonctionnement à assurer, cette énergie ne peut pas être fournie exclusivement par les sources secondaires, comme les batteries chimiques, car cela conduirait à des masses et des volumes prohibitifs.

Il faut noter cependant que durant cette période des équipements opérationnels sont en général à l'état de veille ou hors fonctionnement. La puissance électrique requise est donc sensiblement limitée.

Jusqu'à présent la stabilisation des satellites en orbite de transfert a été assurée par la mise en roulis du satellite suivant une direction perpendiculaire au grand axe de l'ellipse de la trajectoire et située sensiblement dans le plan de l'orbite, l'axe de rotation étant en principe suivant l'axe longitudinal du satellite de manière que le propulseur d'apogée soit bien orienté.

Dans la configuration de transfert, l'énergie électrique est fournie par des panneaux de cellules photovoltaïques situés sur plusieurs faces de la périphérie du satellite. Comme le satellite tourne sur lui-même, il suffit que le grand axe de l'ellipse soit sensiblement orienté dans la direction du soleil pour que les différents panneaux soient soumis successivement au flux solaire. Ils produisent donc successivement de l'énergie électrique qui est recueillie dans des batteries chimiques.

Cette méthode de stabilisation directionnelle en transfert par mise en rotation rapide du satellite, qui est inévitable avec un propulseur d'apogée à propergols solides, présente cependant quelques inconvénients.

Dans le cas de propergols liquides, elle peut en effet conduire à des problèmes de ballottement des liquides et d'instabilité à long terme. De plus, elle ne permet pas le meilleur usage des équipements de bord prévus pour la mission opérationnelle tels que les senseurs terrestres et solaires. Enfin, la puissance qui pourrait être fournie par le générateur solaire replié est insuffisante pour couvrir les besoins du satellite.

Pour remédier à ces inconvénients, il existe une autre méthode de transfert: elle consiste à stabiliser le satellite autour de trois de ses axes. Ce procédé met en oeuvre différents moyens de détection de l'attitude (senseurs solaires et terrestres en général) dont les informations déclenchent le fonctionnement de différents moyens de correction (tuyères ou volants d'inertie par exemple).

Avec cette méthode de transfert, il existe actuellement plusieurs solutions pour recueillir de l'énergie au cours de cette phase de la mise à poste du satellite.

Une première solution consiste à maintenir les panneaux solaires en configuration repliée, les panneaux étant disposés de manières que le panneau extérieur ait ses cellules face à l'extérieur. Si le satellite comporte deux panneaux symétriques l'un des panneaux extérieurs devra se trouver face au soleil, ce qui implique que le soleil devra se trouver sensiblement suivant le grandaxe de l'ellipse de transfert. Il faudra, pour passer à la configuration opérationnelle géostationnaire, réaliser une rotation d'un quart de tour avant le déploiement des panneaux dont la direction du déploiement doit être parallèle à l'axe Nord—Sud. Par ailleurs, l'exposition d'un tel panneau au soleil pose un problème très important de refroidissement, notamment pour les équipements logés dans le corps du satellite, puisque la face arrière ne peut rayonner vers l'espace, comme cela se produit lorsque le panneau est déployé. On est donc conduit à réduire la puissance recueillie en modifiant l'angle compris entre le grand axe de l'orbite de transfert et la direction du soleil, ce qui se traduit par une limitation des fenêtres de tir (possibilités de lancement).

La modification de cet angle produit de plus une importante réduction de la puissance électrique et conduit de ce fait à une solution qui ne peut être pratiquement envisagée.

Une deuxième solution consiste à déployer entièrement les panneaux suivant l'axe Nord—Sud du satellite, dès le début de la phase de transfert. Dans cette configuration, le refroidissement des cellules est assuré. En revanche, lors du fonctionnement du propulseur d'apogée, les panneaux seraient soumis à des contraintes (dues à une forte accélération) qui conduiraient à un dimensionnement incompatible avec un bilan de masse raisonnable, sortout dans le cas des ensembles de panneaux de grande envergure utilisés sur les satellites équipés d'émetteurs de grande puissance. Ce problème est sensiblement le même, que les panneaux soient dans le plan de l'axe du satellite ou qu'ils soient orthogonaux à ce même axe.

La présente invention, applicable à un satellite stabilisé suivant ses trois axes, a pour but de rendre compatibles la nécessité d'avoir une source d'énergie électrique utilisable au cours du transfert et celle d'avoir une structure et un encastrement du panneau suffisamment rigide pour résister aux sollicitations dues à la propulsion d'apogée.

Par rapport au document FR-A-2 365 154 qui décrit déjà un procédé pour la mise sur orbite géostationnaire d'un satellite artificiel alimenté en énergie électrique au moyen de deux générateurs principaux du type photovoltaïque, disposés symétriquement par rapport au corps dudit satellite, ce satellite étant mis sur une orbite intermédiaire de transfert, avant d'être placé sur son orbite géostationnaire par l'action d'un moteur d'apogée, et étant stabilisé selon trois de ses axes aussi bien sur son orbite de transfert que sur son orbite géostationnaire, l'énergie électrique nécessaire audit satellite pendant son passage à l'orbite géostationnaire étant obtenue par l'exposition au soleil de deux générateurs photovoltaïques qui sont déployables symétriquement par rapport à l'un des axes principaux dudit satellite, l'invention est caractérisée en ce que l'énergie électrique nécessaire au satellite pendant son parcours de l'orbite de transfert et pendant son passage de cette orbite à l'orbite géostationnaire est obtenue par l'exposition au soleil de deux protions symétriques de chacun des deux générateurs photovoltaïques principaux, lesdites portions symétriques correspondant à un déploiement partiel desdits générateurs photovoltaïques principaux et l'exposition de la totalité de ceux-ci n'étant commandée qu'après le fonctionnement dudit moteur d'apogée.

Ainsi, la présente invention consiste à effectuer, sur un ordre télécommandé, le déploiement partiel des générateurs solaires quel que soit le type de celui-ci, au moyen des mécanismes normaux prévus pour le déploiement total desdits générateurs. De ce fait, la partie déployée des générateurs est de faible envergure et il s'en suit que les contraintes d'encastrement sont relativement faibles. En cas de besoin, il est possible de renforcer la structure de cette partie sans porter préjudice au bilan de masse de l'ensemble des panneaux. La partie non déployée reste solidaire du corps du satellite jusqu'au déploiement complet qui a lieu après le fonctionnement du moteur d'apogée, ledit déploiement étant lui aussi télécommandé. Après ce déploiement, les panneaux peuvent être orientés vers le soleil et le corps du satellite équipé de ses antennes est orienté vers la Terre.

Le déploiement partiel et symétrique des générateurs solaires permet d'augmenter sensiblement leur fréquence propre et de réduire ainsi les couplages gênants avec le corps du satellite.

Un autre avantage de l'invention consiste en ce que la puissance électrique fournie par le générateur solaire est sensiblement constante, sauf en période d'éclipse, et qu'elle n'est pas limitée par la température des cellules, le générateur travaillant sensiblement dans les mêmes conditions qu'en phase opérationnelle, lorsqu'il est totalement déployé.

Du fait que la production d'électricité est constante, les batteries ne sont plus sollicitées que lors des éclipses, ce qui est beaucoup plus favorable pour leur longévité.

Le procédé de déploiement partiel d'un générateur solaire ou d'un élément associé sur l'orbite de transfert peut s'appliquer aux différents types de panneaux solaires, qui peuvent être en particulier:

— panneaux rigides déployables suivant une articulation orthogonale à l'axe du moteur d'apogée,
— panneaux rigides déployables suivant une articulation parallèle au dit axe,
— panneaux déployables ou déroulables stockés dans un conteneur mobile s'éloignant du corps du satellite, soit parallèlement, soit en tournant.

Les figures du dessin annexé feront bien comprendre comment l'invention peut être réalisée.

Les figures 1, 2 et 3 illustrent les différentes phases de la mise à poste d'un satellite géostationnaire.

Les figures 4 et 5 montrent l'attitude d'un satellite stabilisé suivant trois de ses axes, les panneaux solaires étant respectivement repliés et dépliés.

Les figures 6 à 9 illustrent l'application de l'invention au cas d'un satellite pourvu de panneaux solaires rigides se déployant autour d'axes de rotation orthogonaux à l'axe longitudinal du satellite (axe du moteur d'apogée).

Les figures 10 à 13 illustrent l'application de l'invention au cas d'un satellite pourvu de panneaux solaires rigides se déployant autour d'axes de rotation parallèles à l'axe longitudinal du satellite (axe du moteur d'apogée).

Les figures 14, 15 et 16 illustrent l'application des figures 6 à 9, lorsque les générateurs sont pourvus de dissipateurs thermiques.

Les figures 17, 18 et 19 illustrent l'application de l'invention au cas d'un satellite pourvu de générateurs solaires souples dépliables ou déroulables enfermés dans des conteneurs, qui sont éloignés du corps du satellite au moyen d'un parallélogramme déformable tournant.

Les figures 20, 21 et 22 montrent une variante de réalisation de l'invention concernant un satellite pourvu de générateurs solaires constitués d'une partie rigide et d'une partie principale souple déroulable ou dépliable enfermée dans un conteneur jusqu'à la phase géostationnaire.

Sur ces figures, des références identiques désignent des éléments semblables.

Grâce aux figures 1 à 3, on explique ci-après la manière la plus classique de placer à poste un satellite géostationnaire. Sur ces figures, les différentes orbites sont vues en perspective. Tout d'abord, le satellite est lancé à partir de la Terre T, et, après une trajectoire de lancement 1, est placé sur une orbite basse 2, à une altitude voisine de 200 km (figure 1).

La figure 2 illustre le placement sur une orbite de transfert 3 à partir d'un point 4 de l'orbite basse 2. Ce point 4 est le périgée de l'orbite de transfert 3, dont l'apogée 5 se trouve à environ 36 000 km de la surface de la Terre. Cette manoeuvre peut être obtenue par le fonctionnement d'un propulseur dit »de périgée«, qui est ensuite séparé du satellite.

La mise sur une orbite géostationnaire 6 (figure 3) est effectuée à partir de l'apogée 5 de l'orbite de transfert 3. Cette manoeuvre est obtenue par le fonctionnement d'un propulseur dit »d'apogée« qui peut rester solidaire du satellite. L'orbite géostationnaire 6 est quasi-circulaire à une altitude proche de 36 000 km: elle est décrite en 24 h, ce qui permet au satellite de rester sensiblement au dessus d'une même zone de l'équateur terrestre.

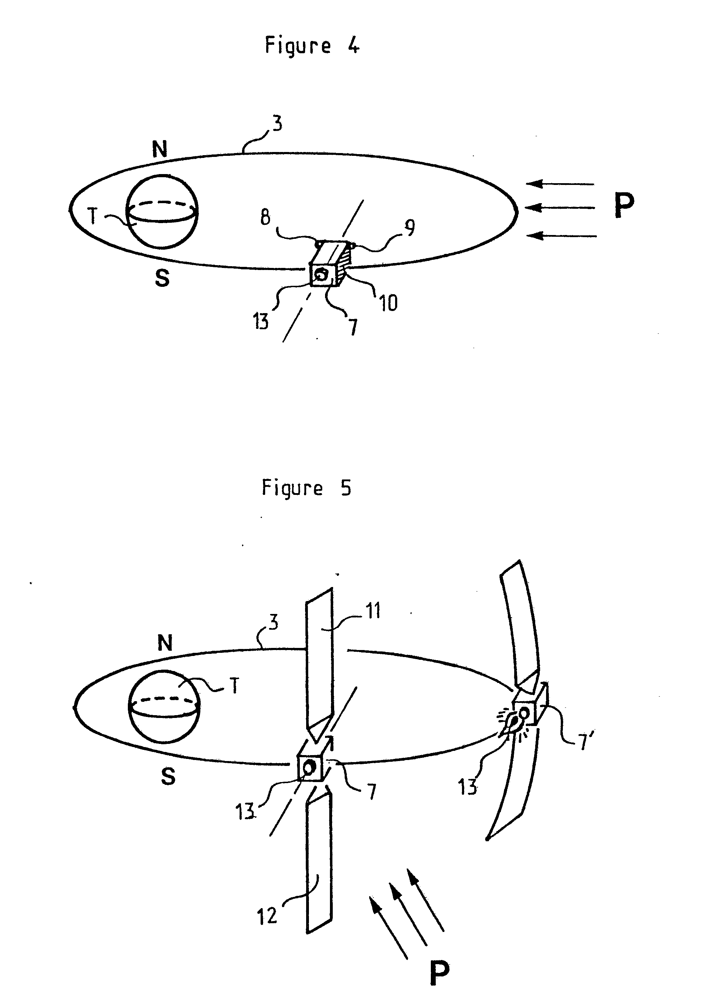

Les figures 4 et 5 représentent deux configuration différentes des générateurs solaires d'un satellite 7 stabilisé suivant trois de ses axes, sur son orbite de transfert 3.

La mesure d'attitude est effectuée au moyen de senseurs 8 dirigés vers la terre T et/ou de senseurs 9 dirigés vers le soleil P. Ces senseurs 8 et 9 permettent d'orienter l'élément extérieur 10 d'un générateur solaire replié contre le satellite 7 (figure 4) dans la direction du soleil P.

Comme il a été mentionné ci-dessus, on est conduit à donner une inclinaison au satellite 7, grâce aux indications des senseurs 8 et 9 de manière à limiter l'échauffement du panneau 10.

En effet, la face arrière du panneau 10 est appliquée contre le corps du satellite 7 de sorte que la chaleur qui se développe dans ce panneau ne peut être dissipée. Il en résulte une baisse des performances du panneau 10 (pouvant aller jusqu'à une détérioration de celui-ci), ainsi qu'une perturbation thermique des équipements disposés dans le satellite 7. La configuration de la figure 4 n'est donc pas utilisable dans la plupart des cas.

On doit noter de plus que les senseurs 8 et 9 ne sont pas utilisables en orbite géostationnaire 6 et qu'il faut en prévoir d'autres pour la stabilisation sur cette orbite. Par ailleurs, l'orientation du satellite 7 par rapport au soleil P et à la terre T ne permet pas un contrôle précis de son orientation lors du fonctionnement du moteur d'apogée.

Dans la configuration montrée par la figure 5, les générateurs symétriques 11 et 12 du satellite 7 sont entièrement déployés lorsque le satellite est sur l'orbite de transfert 3. Une telle configuration permet d'avoir une meilleure orientation du satellite 7 lors de la phase d'apogée, parce que la direction du soleil et celle de la Terre peuvent faire entre elles un angle important.

Cependant, cette disposition ne peut être retenue lorsque l'envergure des générateurs 11 et 12 devient importante (correspondant à des puissances supérieures à 1 kw) pour deux motifs principaux:

— dimensionnement de la structure 11 et 12 qui conduit à des masses prohibitives pour assurer à celle-ci une tenue mécanique susceptible de résister aux sollicitations produites par le fonctionnement du moteur d'apogée (dont la tuyère 13 est visible sur les figures 4 et 5)
— couplages dynamiques avec le corps du satellite qui peuvent conduire à une imprécision sur la direction de la poussée du moteur d'apogée.

Sur la figure 5, on a illustré une position 7' du satellite 7, dans laquelle le moteur d'apogée fonctionne, les générateurs 11 et 12 étant alors déformés sous l'action de la poussée dudit moteur.

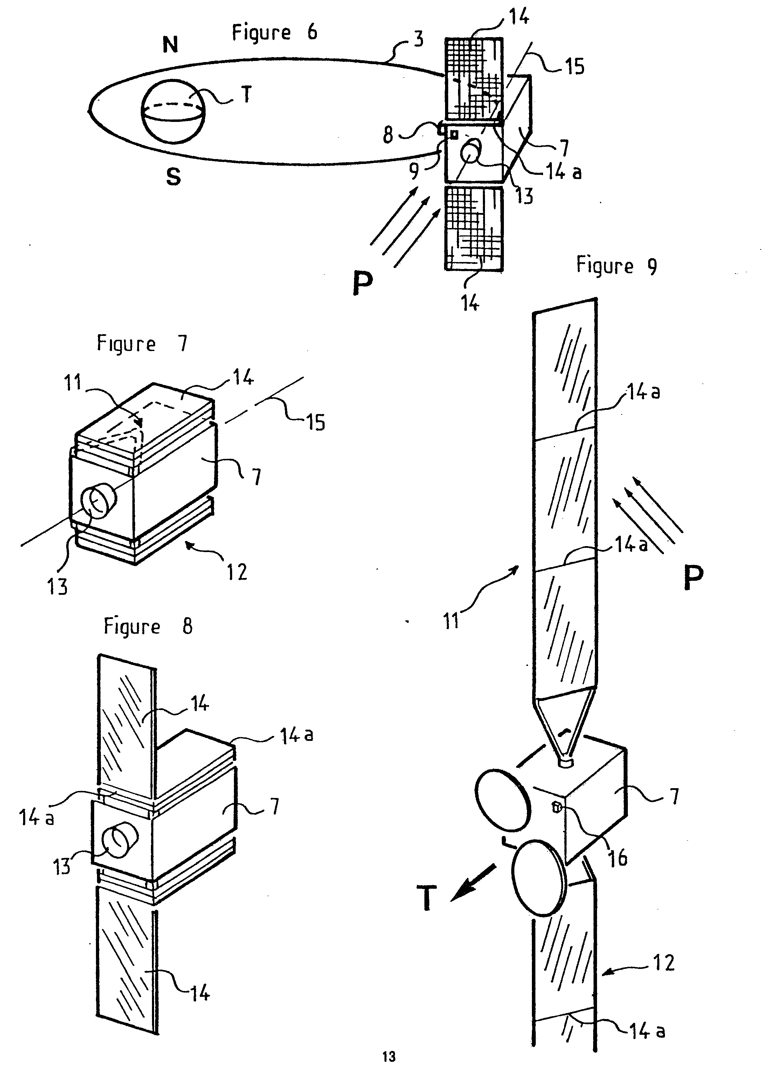

La configuration montrée sur les figures 6 et 7 correspond à une application de l'invention à un satellite 7 comportant des générateurs solaires 11 et 12 constitués de façon connue, des panneaux rigides déployables 14, repliables le long du corps du satellite 7.

Les générateurs 11 et 12 sont reliés à deux faces opposées du satellite 7 et sont symétriques l'un de l'autre, aussi bien en position repliée,

qu'en position déployée. Le satellite est stabilisé suivant trois de ses axes sur l'orbite 3, et les panneaux 14 sont articulés les uns aux autres autour d'articulations 14a de déploiement orthogonales à l'axe longitudinal 15 du satellite (axe du moteur d'apogée). Cette configuration est caractérisée par le déploiement partiel (le panneau d'extrémité 14 de chaque générateur) en orbite de transfert 3 des générateurs 11 et 12, grâce aux moyen normalement prévus pour le déploiement total et commandés partiellement.

Dans ce cas, étant donné que l'arrière des panneaux 14 déployés peut rayonner vers l'espace, ces panneaux peuvent être exposés normalement au flux solaire. Ceci veut dire que le soleil doit être dirigé suivant l'axe 15 du moteur d'apogée, c'est-à-dire suivant le petit axe de l'orbite de transfert 3 et les senseurs solaires 9 se trouvent à 90° des senseurs terrestres 8, ce qui produit la meilleure précision pour la phase d'apogée.

Les figures 7 et 8 montrent respectivement le satellite 7 en configuration de lancement, avec ses panneaux extérieurs 14 repliés, et en configuration sur orbite de transfert 3 et lors de la propulsion d'apogée. Les panneaux extérieurs 14 sont dépliés face au soleil P par une rotation de 90°. On peut constater que le porte-à-faux en configuration des figures 6 et 8 est relativement peu important et qu'ainsi, les moments d'encastrement restent compatibles avec une structure légère.

La figure 9 montre l'aspect du satellite 7 en orbite géostationnaire avec ses générateurs 11 et 12 entièrement déployés, l'orientation de la Terre étant contrôlée par des senseurs terrestres 16.

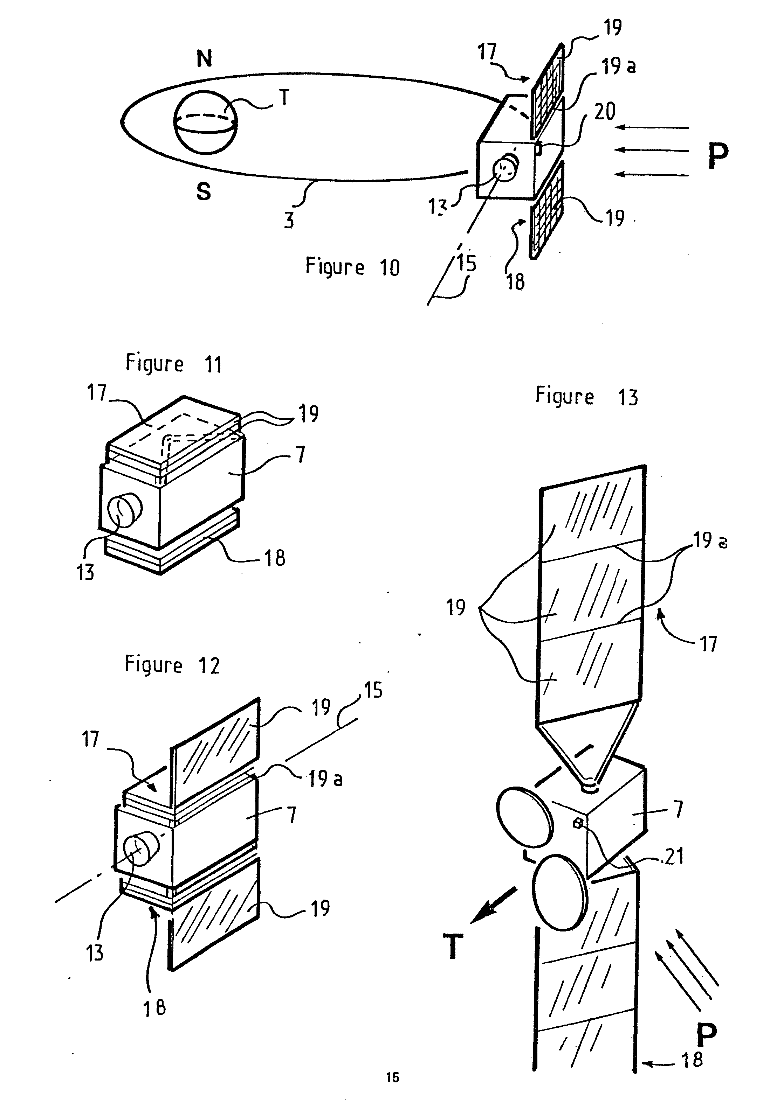

Dans la variante de réalisation de l'invention montrée par les figures 10 à 13, le satellite 7 stabilisé suivant trois de ses axes est équipé de générateurs solaires déployables 17 et 18 symétriques, composés de panneaux rigides 19 dont les axes de pliage 19a sont parallèles à l'axe longitudinal 15 du corps du satellite 7 et dont le panneau extérieur 19 est déplié en configuration pour l'orbite de transfert.

Etant donné que la face arrière des panneaux extérieurs 19 déployés peut rayonner vers l'espace, il est possible de disposer ces panneaux normalement au flux solaire. Cependant, comme il en résulte que le soleil est dirigé suivant le grand axe de l'orbite de transfert et que cette disposition ne permet pas d'avoir un contrôle précis de l'attitude lors du fonctionnement du moteur d'apogée, il est souhaitable que ce grand axe et la direction du soleil fassent entre eux un angle d'au moins 15°, ce qui réduit un peu les performances et oblige à utiliser des senseurs solaires spéciaux 20.

La figure 11 montre les générateurs 17 et 18 en configuration repliée contre le satellite 7 (lancement), tandis que la figure 12 montre le satellite dans sa configuration sur orbite de transfert 3 et en propulsion d'apogée. Les panneaux extérieurs 19 sont dépliés face au soleil par une rotation de 90°. On peut constater que, comme le panneau est en général plus long que large, le porte-à-faux est moindre que dans le cas illustré par les figures 6 à 9.

La figure 13 montre l'aspect du satellite 7 en orbite géostationnaire, ses générateurs 17 et 18 étant complètement déployés. Un senseur terrestre 21 contrôle l'orientation vers la Terre.

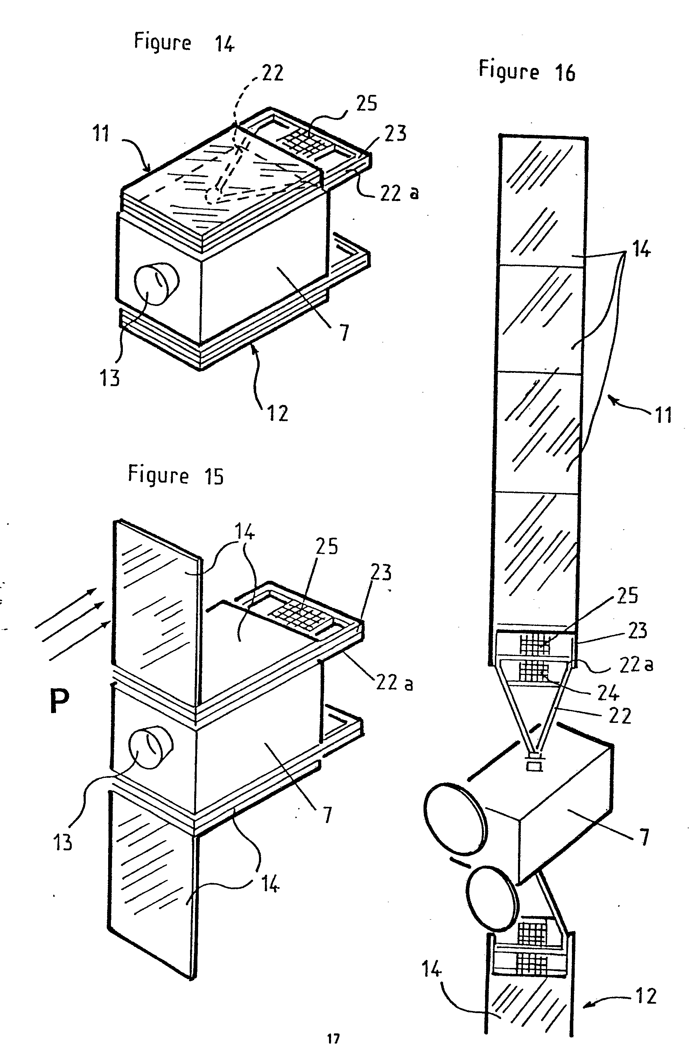

La variante de réalisation des figures 14, 15 et 16 est voisine de celle des figures 6 à 9. On y retrouve des générateurs solaires 11 et 12, composés de panneaux rigides 14 articulés.

Le panneau 14 le plus proche du satellite 7 est relié à celui-ci, de façon connue, par une fourche ou joug 22, comportant des prolongements 22a, articulés des prolongements 23 du cadre dudit panneau. Entre les prolongements 22a et 23, sont montés des dissipateurs thermiques 24 et 25, respectivement.

Ces dissipateurs 24 et 25 permettent d'évacuer l'énergie excédentaire produite par les panneaux, lorsqu'elle n'est pas utilisée. Un tel agencement évite d'avoir à placer ces dissipateurs à la surface du satellite, ce qui simplifie les problèmes d'aménagement et de contrôle thermique du corps de satellite.

Sur la figure 14, le satellite 7 est montré en configuration entièrement repliée. On y distingue la fourche 22, le prolongement 23 et le dissipateur 25 qui déborde du corps du satellite 7 de manière à avoir un angle de vue important vers l'espace.

La figure 15 montre le satellite 7 en configuration d'orbite de transfert: le premier panneau 14 (le plus extérieur) de chacun des générateurs 11 et 12 est déplié face au soleil, le dissipateur 24 restant à l'ombre.

La configuration en orbite géostationnaire est montrée par la figure 16.

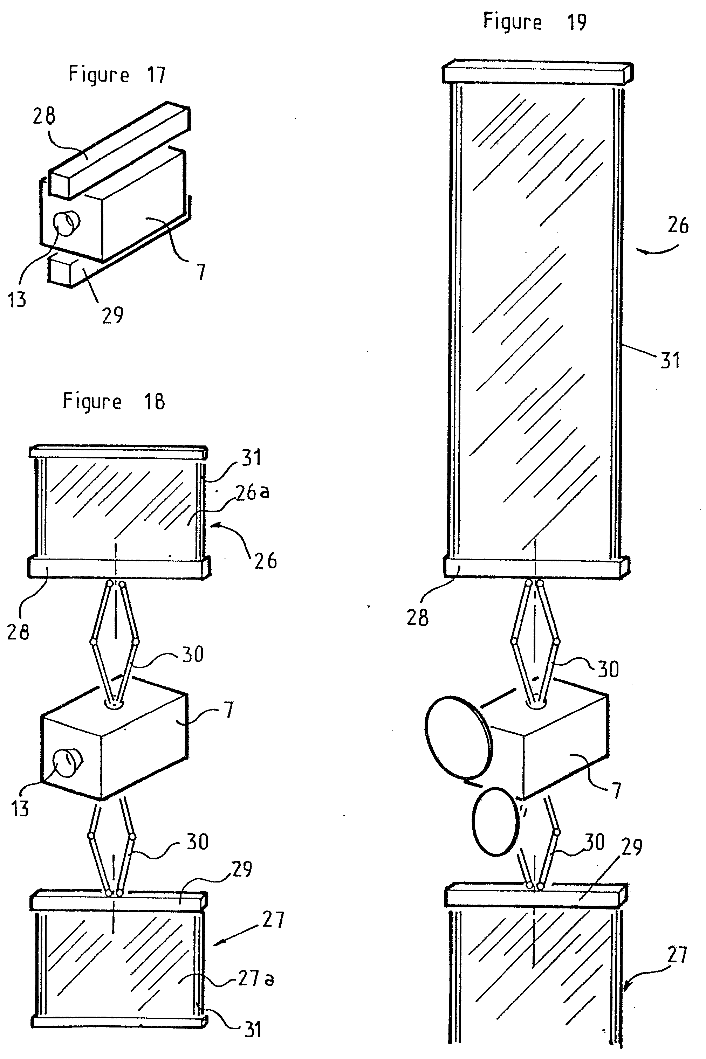

Les figures 17, 18 et 19 illustrent encore une autre variante de l'invention. De cette variante, le satellite 7 est équipé de deux générateurs solaires souples 26 et 27 emmagasinés dans des conteneurs 28 et 29, respectivement reliés à des faces opposées du satellite 7. Les générateurs 28 et 29 sont déployés en deux phases: la première correspondant au parcours de l'orbite de transfert et la seconde à l'orbite géostationnaire.

La figure 17 montre les conteneurs 28 et 29 des générateurs solaires 26 et 27 fixés sur la structure du satellite 7, dans le sens de sa longueur, permettant ainsi de disposer de générateurs de largeur importante, sans conduire à un encombrement élevé du satellite.

La figure 18 illustre la configuration sur orbite de transfert 3. Des structures articulées 30, permettant d'éloigner les conteneurs 28 et 29 du satellite 7, sont réalisées de telle manière qu'un se déployant, il se produise simultanément une rotation importante destinée à mettre les générateurs 26 et 27 en direction du soleil. Après fonctionnement de ce mécanisme, des premières portions 26a et 27a des panneaux sont libérées et extraites des conteneurs 28 et 29 respectifs par le moyen de structures extensibles 31. Le contrôle du déploiement peut être effectué au niveau de la membrane porte-cellules ou au niveau de la structure. Ce déploiment partiel est effectué par les organes prévus pour le déploiement normal complet des générateurs et est commandé depuis la terre.

La figure 19 montre la configuration sur orbite géostationnaire.

On y voit le satellite 7, les deux conteneurs 28 et 29, les structures articulées 30 qui orientent les générateurs 26 et 27, ainsi que l'ensemble des générateurs dépliés ou déroulés à l'aide des structures extensibles 31.

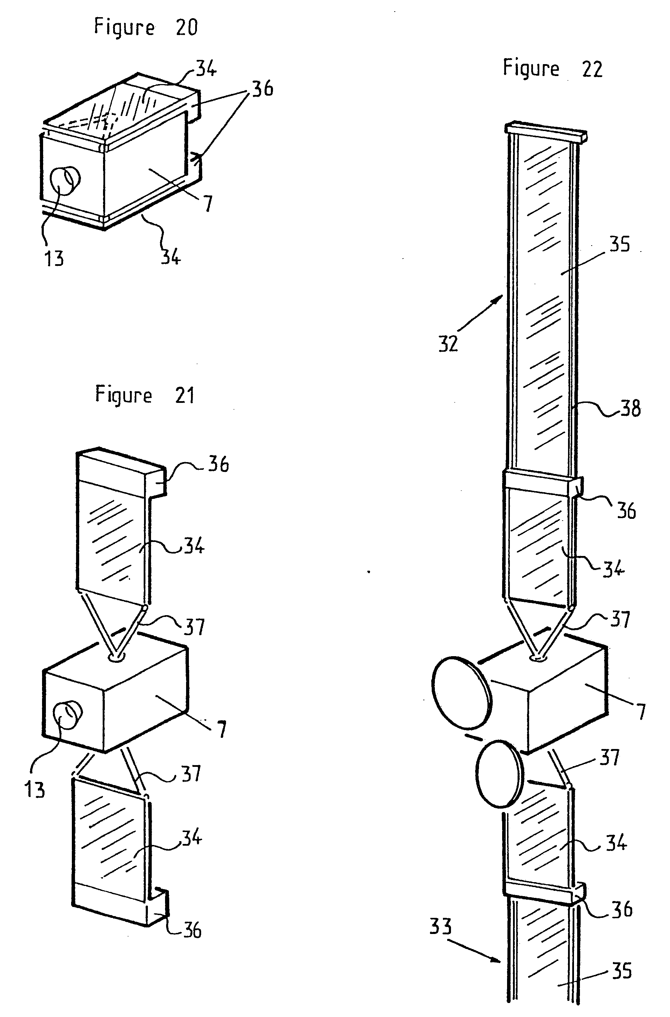

Dans le mode de réalisation des figures 20, 21 et 22, chaque générateur solaire 32 et 33 se compose d'un panneau rigide 34, proche du satellite 7, et d'une partie souple 35. La partie souple 35 est logée, à chaque fois, dans un conteneur 36, porté par l'extrémité du panneau rigide 34, opposée au satellite 7.

En position repliée (figure 20), les panneaux rigides 34 recouvrent les faces correspondantes du satellite 7, les conteneurs 36 se trouvant à l'extérieur de ces faces.

En configuration d'orbite de transfert (figure 21), seuls les panneaux rigides 34 sont déployés, au bout des fourches 37. Dans ce cas, chaque panneau 34 a sa face arrière à l'ombre, ce qui lui permet de fonctionner en plein soleil.

La figure 22 montre l'aspect du satellite 7 en configuration géostationnaire. Les conteneurs 36 sont ouverts: il en sort les panneaux souples 35, mis en tension par des structures extensibles 38.

## Revendications

1. Procédé pour la mise sur orbite géostationnaire d'un satellite artificiel (7) alimenté en énergie électrique au moyen de deux générateurs principaux du type photovoltaïque, disposés symétriquement par rapport au corps dudit satellite, ce satellite étant mis sur une orbite intermédiaire de transfert (3), avant d'être placé sur son orbite géostationnaire (6) par l'action d'un moteur d'apogée, et étant stabilisé selon trois de ses axes aussi bien sur son orbite de transfert que sur son orbite géostationnaire, l'énergie électrique nécessaire audit satellite pendant son passage à l'orbite géostationnaire étant obtenue par l'exposition au soleil de deux générateurs photovoltaïques qui sont déployables symétriquement par rapport à l'un des axes principaux dudit satellite, caractérisé en ce que l'énergie électrique nécessaire au satellite pendant son parcours de l'orbite de transfert et pendant son passage de cete orbite à l'orbite géostationnaire est obtenue par l'exposition au soleil de deux portions symétriques (14, 19, 26a, 27a, 34) de chacun des deux générateurs photovoltaïques principaux, lesdites portions symétriques (14, 19, 26a, 27a, 34) correspondant à un déploiement partiel desdits générateurs photovoltaïques principaux et l'exposition de la totalité de ceux-ci n'étant commandée qu'après le fonctionnement dudit moteur d'apogée.

2. Procédé selon la revendication 1, appliqué à un satellite artificiel dans lequel chacun desdits générateurs solaires photovoltaïques principaux est constitué d'un ensemble de panneaux rigides (14) articulés entre eux, caractérisé en ce que l'on déplie au moins le panneau extrême desdits générateurs photovoltaïques principaux autor d'un axe (14a) orthogonal à l'axe (15) du moteur d'apogée.

3. Procédé selon la revendication 1, appliqué à un satellite artificiel dans lequel chacun desdits générateurs solaires photovoltaïques principaux est constitué d'un ensemble de panneaux rigides (19) articulés entre eux, caractérisé en ce que l'on déplie au moins le panneau extrême desdits générateurs photovoltaïques principaux autor d'un axe (19a) parallèle à l'axe (15) du moteur d'apogée.

4. Procédé selon la revendication 1, appliqué à un satellite artificiel comprenant des panneaux solaires (26, 27, 35) stockés dans des conteneurs (28, 29, 36) dans lesquels ils sont pliés ou enroulés, et dont ils sont extraits par une structure extensible, caractérisé en ce que la séquence de déploiement partiel est assurée par le contrôle soit de la membrane porte-cellules, soit de la structure, lesdits conteneurs étant tout d'abord mis en place au moyen de structures articulées d'éloignement (30, 37) avec ou sans rotation.

5. Procédé selon la revendication 4, caractérisé en ce que les conteneurs (28, 29, 36) de stockage des panneaux (26, 27, 35) sont disposés à l'extrémité d'un panneau rigide (34) lequel est déplié en orbite de transfert.

6. Procédé selon l'une quelconque des revendications 1 à 5, caractérisé en ce que chacun desdits générateurs solaires photovoltaïques comporte un radiateur thermique (24, 25) disposé pour voir l'espace aussi bien en position repliée qu'en position déployée des générateurs.

## Patentansprüche

1. Verfahren, einen künstlichen Satelliten (7) auf eine geostationäre Umlaufbahn zu bringen, der mit Hilfe von zwei Sonnenzellengeneratoren mit elektrischer Energie versorgt wird, die zum Satellitenkörper symmetrisch angeordnet sind, wobei der Satellit zunächst auf eine der späteren Überführung dienenden Zwischenumlaufbahn (3) gebracht wird, bis er dann durch die Wirkung eines Apogäum-Motors auf seine geostationäre Umlaufbahn (6) gebracht und dabei sowohl auf der Überführungsbahn als auch auf der geostationären Bahn auf seinen drei Achsen stabilisiert wird, und wobei die für den Übergang zur geostationären Umlaufbahn für den Satelliten erforderliche elektrische Energie dadurch gewonnen wird, daß beide Sonnenzellengeneratoren, die zu einer der Hauptachsen des Satelliten symmetrisch ausfahrbar sind, der Sonne ausgesetzt werden, dadurch gekennzeichnet, daß die elektrische Energie, die der Satellit während seines Verbleibs auf der Überführungsbahn und während seines Durchgangs von dieser Bahn zur geostationären Umlaufbahn benötigt, gewonnen wird, indem die beiden symmetrischen Abschnitte (14, 19, 26a, 27a, 34) jedes der beiden hauptsächlichen Sonnenzellengeneratoren der Sonne ausgesetzt werden, wobei die symmetrischen Abschnitte (14, 19, 26a, 27a, 34) einem teilweisen Ausfahren der hauptsächlichen Sonnenzellengeneratoren entsprechen und wobei die Aussetzung zur Sonne der symmetrischen Abschnitte insgesamt nur nach dem Betrieb des Apogäum-Motors veranlaßt wird.

2. Verfahren nach Anspruch 1 zur Verwendung mit einem künstlichen Satelliten, bei dem die hauptsächlichen Sonnenzellengeneratoren aus einer Einheit von starren Panelen (14) gebildet sind, die untereinander angelenkt sind, dadurch gekennzeichnet, daß man zumindest das äußerste Panel der Sonnenzellengeneratoren um eine senkrecht zur Achse (15) des Apogäum-Motors stehende Achse (14a) ausfährt.

3. Verfahren nach Anspruch 1 zur Verwendung mit einem künstlichen Satelliten, bei dem die hauptsächlichen Sonnenzellengeneratoren aus einer Einheit von starren Panelen (19) gebildet sind, die untereinander angelenkt sind, dadurch gekennzeichnet, daß man zumindest das äußerste Panel der Sonnenzellengeneratoren um eine parallel zur Achse (15) des Apogäum-Motors verlaufende Achse (19a) ausfährt.

4. Verfahren nach Anspruch 1 zur Verwendung mit einem künstlichen Satelliten mit Sonnenpanelen (26, 27, 35), die in Behältern (28, 29, 36) in zusammengefaltetem oder zusammengerolltem Zustand gelagert sind und die aus diesen Behältern durch einen ausziehbaren Aufbau herausgenommen werden, dadurch gekennzeichnet, daß die Folge des teilweisen Ausfahrens durch die Kontrolle entweder der Zellenträgermembran oder des Aufbaus gewährleistet wird, wobei die Behälter zunächst mit Hilfe von sich drehenden oder nicht drehenden angelenkten Wegrückaufbauten (30, 37) in Stellung gebracht werden.

5. Verfahren nach Anspruch 4, dadurch gekennzeichnet, daß die Behälter (28, 29, 36) zur Einlagerung der Panele (26, 27, 35) am auslaufenden Ende eines starren Panels (34) angeordnet sind, das auf der Überführungsumlaufbahn ausgefahren ist.

6. Verfahren nach einem der vorhergehenden Ansprüche 1 bis 5, dadurch gekennzeichnet, daß jeder der Sonnenzellengeneratoren einen Wärmestrahler (24, 25) aufweist, der zum Raum hin ebenso in eingefahrener wie auch ausgefahrener Stellung der Generatoren angeordnet ist.

## Claims

1. Process for placing an artificial satellite (7) on geostationary orbit, said satellite being supplied with electrical energy by means of two main generators of the photovoltaic type disposed symmetrically with respect to the body of said satellite, this satellite being placed on an intermediate transfer orbit (3), before being placed on its geostationary orbit (6) by the action of at least an apogee motor, and being stabilised along three of its axes both on its transfer orbit and on its geostationary orbit, the electrical energy necessary for the satellite during its passage to the geostationary orbit being obtained by exposing to the sun two photovoltaic generators which are extendable symmetrically with respect to one of the main axes of said satellite, characterized in that the electrical energy necessary for the satellite during its course of the transfer orbit and during its passage from this orbit to the geostationary orbit is obtained by exposing to the sun two symmetrical portions (14, 19, 26a, 27a, 34) of each of the two main photovoltaic generators, said symmetrical portions (14, 19, 26a, 27a, 34) corresponding to a partial extension of said main photovoltaic generators and exposing of the whole of said generators being made only after functioning of said apogee motor.

2. Process according to claim 1, applied to an artificial satellite, in which each of said main photovoltaic solar generators is constituted by a group of rigid panels (14) articulated on one another, characterized in that at least the end panel of said main photovoltaic generators is extended about an axis (14a) at right angles to the axis (15) of the apogee motor.

3. Process according to claim 1, applied to an artificial satellite in which each of said main photovoltaic solar generators is constituted by a group of rigid panels (19) articulated on one another, characterized in that at least the end panel of said main photovoltaic generators is extended about an axis (19a) parallel to the axis (15) of the apogee motor.

4. Process according to claim 1, applied to an artificial satellite comprising solar panels (26, 27, 35) stored in containers (28, 29, 36) in which they are folded or wound, and from which they are extracted by an extensible structure, characterized in that the sequence of partial extension is ensured by the control either of the membrane bearing the cells or of the structure, said containers being firstly positioned by means of articulated spacer structures (30, 37) with or without rotation.

5. Process according to claim 4, characterized in that the containers (28, 29, 36) for storing the panels (26, 27, 35) are disposed at the end of a rigid panel (34) which is unfolded in transfer orbit.

6. Process according to one of claims 1 to 5, characterized in that each of said photovoltaic solar generators comprises a thermal radiator (24, 25) disposed to face space both in folded position and in extended position of the generators.

0 064 917

Figure 1

Figure 2

Figure 3

9

## Figure 4

## Figure 5

Figure 6

Figure 7

Figure 8

Figure 9

Figure 10

Figure 11

Figure 13

Figure 12

Figure 14

Figure 16

Figure 15

Figure 17

Figure 18

Figure 19

Figure 20

Figure 22

Figure 21